# EUROPÄISCHE PATENTSCHRIFT

(11) **EP 3 159 229 B1**
(45) Veröffentlichungstag und Bekanntmachung des Hinweises auf die Patenterteilung: **27.06.2018**
(21) Anmeldenummer: 16192814.8
(22) Anmeldetag: 07.10.2016
(51) Int. Cl.: B60T 3/00, B64F 1/16, B60P 3/07

(54) **STANDSICHERUNGSVORRICHTUNG, SYSTEM AUFWEISEND EINE SOLCHE STANDSICHERUNGSVORRICHTUNG UND VERFAHREN ZUR STANDSICHERUNG EINES LKW ODER SATTELAUFLEGERS**
STABILITY DEVICE, SYSTEM COMPRISING SUCH A STABILITY DEVICE AND METHOD FOR STABILISING A COMMERCIAL VEHICLE OR SEMITRAILER
DISPOSITIF DE STABILISATION, SYSTÈME COMPRENANT UN TEL DISPOSITIF DE STABILISATION ET PROCÉDÉ DE STABILISATION D'UN POIDS LOURD OU D'UNE REMORQUE

(30) Priorität: 22.10.2015 DE 102015118023
(43) Veröffentlichungstag der Anmeldung: 26.04.2017
(73) Patentinhaber: Arnold, Alfred, 70439 Stuttgart (DE)
(72) Erfinder:
(74) Vertreter: Patentanwälte Behrmann Wagner PartG mbB

(56) Entgegenhaltungen:
- US-A1- 2013 092 890
- US-A1- 2014 367 626
- US-A1- 2015 115 128
- US-A1- 2015 123 054
- US-A1- 2015 197 220
- US-B1- 6 446 937
- US-B1- 7 350 790
- US-B1- 7 581 713

## Beschreibung

Die vorliegende Erfindung betrifft eine Standsicherungsvorrichtung nach dem Oberbegriff des Hauptanspruchs. Ferner betrifft die vorliegende Erfindung ein System aufweisend einen Sattelaufleger sowie eine gattungsgemäße Standsicherungsvorrichtung, und die vorliegende Erfindung betrifft ein Verfahren zur Standsicherung eines LKW oder eines bevorzugt an einer Be- und/oder Entladeanlage stehenden Sattelauflegers.

Aus dem Stand der Technik sind gattungsgemäße Standsicherungsvorrichtungen nach dem Oberbegriff des Hauptanspruchs allgemein bekannt. Diese dienen als Abstützung für Sattelaufleger, die, typischerweise von einer zugehörigen Zugmaschine getrennt und daher von dieser nicht mehr abgestützt, beim Be- oder Entladen verschiedenen mechanischen Belastungen ausgesetzt sind. So erfordern etwa einschlägige Vorschriften das Vorsehen von Abstützeinrichtungen an einem abgekoppelten Sattelaufleger, sobald auf diesen, etwa bei einer Ladeguthandhabung mittels Staplern oder dergleichen, größere Kräfte wirken.

Als aus dem Stand der Technik ist es dabei zunächst als bekannt vorauszusetzen, dass ein Sattelaufleger, typischerweise beidseitig und im Bereich des Angriffs für eine Zugmaschine, eigene ausfahrbare Stützen aufweist, welche bei abgekoppelter Zugmaschine den Aufleger halten und insbesondere vor einem Verkippen sichern. Ferner ist es als aus dem Stand der Technik bekannt vorauszusetzen, mobile, typischerweise manuell handhab- und verfahrbare Standsicherungen vorzusehen, um - wiederum im abgekoppelten Zustand einer Zugmaschine - durch Abstützen eines Träger-(Rahmen)-Abschnitts des Sattelaufliegers eine Kippsicherung zu bewirken.

Allerdings sind derartige, bekannte Technologien zur Standsicherung im Wesentlichen zum Vorsehen bzw. Wirken im Bereich des Zugmaschinen-Angriffspunkts vorgesehen, nicht zuletzt als im (in Fahrtrichtung) rückwärtigen Bereich eines Sattelauflegers ein Fahrwerk mit vorgesehenen Reifen die bodenseitige Abstützung besorgt. Gerade jedoch die bei moderneren Sattelauflegern dort vorgesehene Federung führt zu Problemen bei der bekannten Standsicherung, insbesondere bei durch ein Be- oder Entladen bewirkten Belastungsänderungen des Sattelauflegers. So führen derartige Lastwechsel nämlich insbesondere zu einem (fahrwerksbedingten) Einfedern bekannter Sattelaufleger, mit der damit verbundenen nachteiligen Wirkung, dass die durch das (heckseitige) Einfedern erzeugte Sattelauflegerbewegung die Anbindung des Sattelauflegers zu einem Be- bzw. Entladedock (auch als Verladestation bekannt) beeinträchtigt. Konkret ist dort nämlich der Sattelaufleger an seinem öffnungsseitigen Ende umgeben von einer Dach- bzw. Planenanordnung zum geschützten Zugreifen auf den Innenraum des Sattelauflegers samt Ladegut, und die beschriebene, durch Belastungsänderungen bewirkte Einfederung des Sattelauflegers beeinträchtigt diese Dach- bzw. Planenstruktur, bis hin zur möglichen Beschädigung von Dock- und/oder LKW-Sattelaufleger. Ein vergleichbares Problem entsteht bei LKW im Heckbereich beim Be- oder Entladzugang, auch hier kann potenziell schadenträchtiges Einfedern entstehen.

Zwar scheint es denkbar, dieses Problem durch (situative) Fahrwerksmodifikationen bzw. Fahrwerksversteifungen im Be- bzw. Entladezustand zu lösen, eine entsprechende Anpassung der LKW- bzw. Sattelaufleger-Fahrwerke verursacht jedoch signifikante Kosten, erhöht darüber hinaus Wartungsaufwand und mindert potenzielle Nutzungszeiten. Ein möglicherweise gebotenes Vorsehen bekannter Standsicherungsvorrichtungen im Bereich der für das nachteilige Einfedern anfälligen Hinterräder verbietet sich zudem meist bereits dadurch, dass die LKW-Technologie hier eine Vielzahl von Anbauten oder Aggregaten, auch unmittelbar dem Fahrwerk bzw. den Hinterrädern benachbart, vorsieht, so dass gängige, mobil heranführbare Standsicherungsvorrichtungen bereits aus Platzgründen für eine Verwendung im Bereich einer LKW- oder Sattelaufleger-Hinterachse nicht geeignet sind. Hinzu kommt das Problem, dass auch ein mechanisches Angreifen zum Zweck des (ein Einfedern potenziell verhindernden) Unterstützens des Sattelauflegers nicht ohne Weiteres durch einfachen Zugriff von der Seite möglich ist, als ein für das Unterstützen tauglicher Trägerabschnitt des Sattelauflegers nicht am seitlichen Rand verläuft, sondern oftmals in einem signifikaten Abstand, typischerweise 60 cm und mehr, nach innen versetzt ist. Damit würde dann das Heranführen gattungsgemäß bekannter Vorrichtungen zusätzlich verkompliziert und mit Gefahrenpotential verknüpft.

Aus der US 7,581,713 B1 ist eine Standsicherungsvorrichtung nach dem Oberbegriff des Hauptanspruchs bekannt. Diese Lösung sieht zusätzlich Transportmittel vor, die dem Standfuß für die Standsicherungsvorrichtung zugeordnet sind und ein rollendes Bewegen der Standsicherungsvorrichtung durch manuelle Betätigung ermöglichen. Allerdings ist die Lösung der Transportmittel technisch aufwendig.

Aufgabe der vorliegenden Erfindung ist es daher, eine Standsicherungsvorrichtung nach dem Oberbegriff des Hauptanspruchs so zu verbessern, dass diese bei einfachem und kostengünstigem konstruktivem Aufbau, mit einfacher Handhabung, hoher Standsicherheit und betriebssicher im Bereich eines (heckseitigen) Fahrwerks eines Sattelauflegers oder LKW zum Stützen desselben verwendet werden kann, wobei insbesondere auch unter schwierigen Beladungs- und Umgebungsbedingungen ein zuverlässiges Anbringen der Standsicherungsvorrichtung und nachfolgendes Unterstützen gewährleistet werden soll. Ferner ist ein Unterstützungs- und Standsicherungssystem bestehend aus einer Standsicherungsvorrichtung in Verbindung mit einem LKW oder Sattelaufleger zu schaffen, und es ist ein Verfahren zur Standsicherung eines bevorzugt an einer Be- und/oder Entladeanlage stehenden LKW bzw. Sattelauflegers zu schaffen, welches die beschriebenen Nachteile überwindet und in der aufgabengemäßen Weise Verbesserungen schafft.

Die Aufgabe wird durch die Standsicherungsvorrichtung mit den Merkmalen des Hauptanspruchs gelöst. Vorteilhafte Weiterbildungen der Erfindung sind in den Unteransprüchen beschrieben. Ferner wird Schutz im Rahmen der Erfindung beansprucht für ein System aufweisend einen LKW oder einen bevorzugten von der Zugmaschine abgekoppelt vorgesehenen und weiter bevorzugt an einer Be- oder Entladeanlage stehenden Sattelaufleger mit mindestens einer erfindungsgemäßen Standsicherungsvorrichtung, und es wird unabhängig Schutz beansprucht für ein Verfahren zur Standsicherung eines bevorzugt an einer Be- oder Entladeanlage stehenden Sattelauflegers oder LKW. Dabei ist der Begriff "LKW" und "Sattelaufleger" weit auszulegen und umfasst Lastkraftfahrzeuge bzw. Anhänger verschiedener Größen und Ladevolumina; im Weiteren gelten ein LKW oder ein Sattelaufleger auch als "Fahrzeug".

In erfindungsgemäß vorteilhafter Weise sieht die Standsicherungsvorrichtung am dem (längenverstellbar ausgebildeten) Ständer, am dem Standfuß entgegengesetzten Endbereich, eine sich parallel zur Auflagefläche erstreckende Stützauflage für einen Trägerabschnitt der des LKW bzw. des Sattelauflegers vor, wobei dieser Stützauflage zusätzlich Anschlagmittel zugeordnet sind, die das seitliche Anlegen an den Trägerabschnitt (oder an ein benachbartes, zur Lokalisierung eines Unterstützungspunktes tauglichen Anbaus des Sattelauflegers) gestattet. Die Anschlagmittel zeichnen sich dadurch aus, dass sie sich zumindest abschnittsweise von der Stützauflage vertikal erstrecken, so dass im Rahmen der Erfindung einerseits eine Unterstützung des LKW bzw. Sattelauflegers mittels seines Trägerabschnitts von unten ermöglicht ist, gleichzeitig jedoch die erfindungsgemäßen Anschlagmittel eine präzise und zuverlässige Einführung bzw. Lokalisierung dieses Abstützungspunkts gestatten. Damit eignet sich die vorliegende Erfindung in offensichtlicher Weise auch zur Handhabung für Fahrzeuge, deren Trägerabschnitt von einer Seitenwand nach innen versetzt ist, so dass ein seitlicher Zugriff zur Lokalisierung und nachfolgenden Unterstützung auch unter diesen schwierigen Montagebedingungen vereinfacht ist und betriebssicher gestaltet werden kann.

Dabei ist es weiterbildungsgemäß zunächst bevorzugt, die Funktionskomponenten "Stützauflage" und "Anschlagmittel" im Rahmen einer bevorzugten Weiterbildung der Erfindung als gemeinsames Winkelstück auszugestalten, welches dann noch weiter bevorzugt einstückig ausgestaltet werden kann.

Im Rahmen einer praktischen, besonders nützlichen Ausgestaltung der Erfindung liegt es zudem, im Bereich dieses Winkelstücks (oder in einem benachbarten oberen Bereich des Ständers) einen Handgriff oder dgl. Angriffsabschnitt sowohl zur Höhenverstellung, als auch zur Vereinfachung der manuellen Handhabung vorzusehen; diese Maßnahme, ggf. in Verbindung mit weiteren, bevorzugt vorzusehenden manuell handhabbaren hebel- und/oder stangenartigen Führungsmitteln an der Standsicherungsvorrichtung, gestatten dann in besonders einfacher, bedienungsfreundlicher und betriebssicherer Weise das (manuelle) Bewegen und Führen der Standsicherungsvorrichtung an den beschriebenen komplexen Einsatzort.

Besonders elegant ist diese Technologie zudem verbunden mit dem Standfuß zugeordneten Transportmitteln, welche weiter bevorzugt als Radsatz, Radpaar oder dgl. ausgestaltet sein können. Die Erfindung sieht dann vor, dass, durch ein Verschwenken, Verkippen oder dgl. manuelles Handhaben der Standsicherungsvorrichtung, die Transportmittel zum Ermöglichen eines Rollens der Anordnung auf einen unterliegenden Boden gebracht werden, so dass die beabsichtigte einfache manuelle Handhabung und Bewegung ermöglicht ist, dagegen würde eine aufrechte Sicherungsposition (LKW- bzw. Sattelaufleger-Sicherungszustand) mit auf einem unterliegenden Boden liegender Auflagefläche des Standfußes gemäß dieser Weiterbildung bewirken,
dass die Transportmittel, also etwa der Radsatz, vom unterliegenden Boden beabstandet sind oder zumindest diesen nicht kraftschlüssig berühren, so dass insoweit der Standsicherungsbetrieb unbeeinflusst von den Transportmitteln ist.

Wiederum synergistisch vorteilhaft können die länglichen, hebel- bzw. stangenartigen Führungsmittel der bevorzugten Weiterbildung diesen Transport- und Kippvorgang erleichtern, so dass insbesondere auch dem Handhabungs- und Bedienungspersonal der Umgang mit der erfindungsgemäßen Standsicherungsvorrichtung vereinfacht ist.

Gemäß bevorzugter Ausführungen der Erfindung ist der längenverstellbar und damit zum Anpassen einer zu unterstützenden Höhe des Trägerabschnitts eines LKW bzw. Sattelauflegers anpassbare Ständer teleskopartig ausgestaltet, wobei mehrere ineinandergreifende Trägerelemente geeignet zusammen- bzw. auseinandergeführt und gemäß bevorzugten Ausführungsbeispielen an vorbestimmten Rast- bzw. Verriegelungspositionen lösbar miteinander verbunden werden können. Eine dieses Prinzip weiterbildende oder alternative Ausgestaltung der Erfindung sieht einen Winden- und/oder Spindelantrieb zum Bewirken der Längenverstellung des Ständers vor, wobei, wiederum zusätzlich synergistisch, der weiterbildend vorgesehene und manuell handhabbare Hebel bzw. die Stange, neben ihrer Rolle als Führungsmittel für das Bewegen der Standsicherungsvorrichtung, auch als Kurbel oder dgl. Betätigungsmittel für eine derartige Spindel bzw. Winde ausgestaltet sein kann. Für diesen Betätigungszweck würde etwa der Hebel bzw. die Stange, geeignet kurbelförmig realisiert, in eine entsprechende Betätigungsposition gebracht und ermöglicht der Bedienperson die beabsichtigte Höhenverstellung (üblicherweise am Einsatzort). Im Rahmen der Erfindung kann dabei eine Höhenverstellung sowohl vor einem Heranführen an den Trägerabschnitt, als auch bei bereits herangeführter Standsicherung (also bereits unter dem Träger stehend) erfolgen.

Eine besonders bevorzugte Realisierungsform der Erfindung berücksichtigt die besonderen geometrischen Verhältnisse am beabsichtigten Einsatzort unmittelbar einem (rückwärtigen) Fahrwerk bzw. Radsatz eines LKW oder Sattelauflegers benachbart: Aufgrund der dort üblicherweise anzutreffenden räumlichen Enge bei beabsichtigtem seitlichen Zugriff, d.h. Zuführen der Standsicherungsvorrichtung aus einer Richtung quer zur Längserstreckung und Fahrtrichtung, insoweit parallel zu einer Achsrichtung, wird gemäß bevorzugten Weitebildungen der Erfindung dadurch vereinfacht, dass die Quererstreckung der erfindungsgemäßen Stützauflage samt Anschlagmitteln (also etwa des bevorzugt diese Technologien realisierenden Winkelstücks) deutlich schmaler ist als eine Quererstreckung des die Abstützung zum unterliegenden Boden bewirkenden Standfußes. Dabei ist der Begriff der "Quererstreckung" als Dimensionsvorschrift so zu verstehen, dass in einem Montageverhältnis zum LKW oder Sattelaufleger die Quererstreckung parallel zur Seitenwand des Fahrzeugs verläuft, damit entlang der Längsrichtung und Fahrtrichtung. Die bevorzugte Realisierung der Erfindung sieht vor, dass die Quererstreckung der Stützauflage samt Anschlagmittel weniger als 40 %, bevorzugt weniger als 30 % und noch weiter bevorzugt weniger als 25 % einer maximalen Quererstreckung des Standfußes,(wobei die jeweiligen Quererstreckungen dann zueinander parallel verlaufen) beträgt; eine alternative Dimensionierungsvorschrift im Rahmen von Weiterbildungen der Erfindung setzt die Quererstreckung der Stützauflage und der Anschlagmittel mit diesen Proportionsangaben in Relation zu einem Radabstand von weiterbildungsgemäß die Transportmittel für die Standsicherungsvorrichtung realisierenden Rädern.

Im Ergebnis erreicht die vorliegende Erfindung in überraschend einfacher und eleganter Weise das Ziel, mit einfacher Handhabung und hochgradig betriebssicher eine Positionierung der Standsicherungsvorrichtung im Bereich eines (insbesondere rückwärtigen bzw. heckseitigen) Fahrwerks eines LKW oder Sattelauflegers unterhalb eines (üblicherweise nach innen versetzten) Abschnitts zu erreichen, obwohl, nicht zuletzt durch zahlreiche seitlich am Fahrzeug vorgesehene LKW-Anbauten, der Zugang schmal und ein Unterstützungspunkt schwer zu erkennen und anzufahren ist. Dabei ist die erfindungsgemäße Vorrichtung konstruktiv einfach in der Realisierung, ermöglicht das synergistische und wiederum in der Handhabung optimierte Mehrfach-Nutzen von Handhabungsmitteln und eröffnet so der Standsicherung auch moderner, gefederter (und zum nachteiligen Einfedern neigenden) Fahrzeugen völlig neue Betriebsmöglichkeiten im Be- und Entladezustand. Dabei ist dann beabsichtigte Konsequenz, dass insbesondere nachteilige und durch das unerwünschte Einfedern ansonsten bewirkte Beschädigungen der Ladestation (z.B. des Ladedocks) wirksam ausgeschlossen werden können. Hinzu kommt der Vorteil, dass im Hinblick auf eine Verladestation eine durch ein (belastungsabhängiges) Einfedern erzeugte und etwa für Stapler od. dgl. Ladegeräte problematische Stufenbildung vermieden werden kann.

Während die vorliegende Erfindung zunächst die Standsicherungsvorrichtung als solche beansprucht, so dass im Rahmen dieses Aspekts der Erfindung insbesondere weder der LKW bzw. Sattelausleger noch dessen Trägerabschnitt Teil der Erfindung sind, diese beschreiben vielmehr lediglich den Anwendungskontext, ist es gleichwohl gemäß dem Systemkontext der Erfindung beabsichtigt, auch gemeinsam mindestens eine der Standsicherungsvorrichtung - angebracht oder noch nicht an eine Unterstützungsposition geführt - in Verbindung mit dem Fahrzeug als zur Erfindung gehörig zu beanspruchen. Ferner ist im Rahmen der Erfindung ein Verfahren zur Standsicherung vorgesehen, welches sich insbesondere dadurch auszeichnet, dass die erfindungsgemäße Standsicherungsvorrichtung neben ein Rad und/oder eine gefederte Fahrwerkskomponente des LKW Sattelauflegers und unter dessen Trägerabschnitt gebracht wird, bis die erfindungsgemäß vorgesehenen Anschlagmittel der Bedienperson anzeigen, dass die korrekte Position erreicht ist. Daraufhin kann dann auf verschiedene Weisen die Höhenanpassung des längenverstellbar ausgebildeten Ständers geschehen, bis die Auflagefläche zum Bewirken des Abstützens den Trägerabschnitt (von unten) erreicht, so dass insbesondere dann zu diesem Zeitpunkt die Zugmaschine abgekoppelt werden kann oder auf andere Weise eine Belastung oder ein Absenken des Fahrzeugs im Hinblick auf die Stützauflage ermöglicht ist.

Weitere Vorteile, Merkmale und Einzelheiten der Erfindung ergeben sich aus der nachfolgenden Beschreibung eines bevorzugten Ausführungsbeispiels anhand der Zeichnungen; diese zeigen in:
- Fig. 1: eine Perspektivansicht der erfindungsgemäßen Standsicherungsvorrichtung gemäß einem ersten, bevorzugten Ausführungsbeispiel;
- Fig. 2: eine Draufsicht auf die Vorrichtung des Ausführungsbeispiels der Fig. 1 mit zusätzlich verdeutlichten Maßen für die Quererstreckung des Standfußes, der Stützauflage sowie des Radabstandes;
- Fig. 3: eine Seitenansicht des Ausführungsbeispiels der Fig. 1, Fig. 2 und
- Fig. 4: eine schematische Rückansicht der Standsicherungsvorrichtung des ersten Ausführungsbeispiels der Figuren 1 bis 3 eingeführt an bzw. in einen Einsatzort benachbart eines Hinterrades bzw. Fahrwerks eines Sattelauflegers.

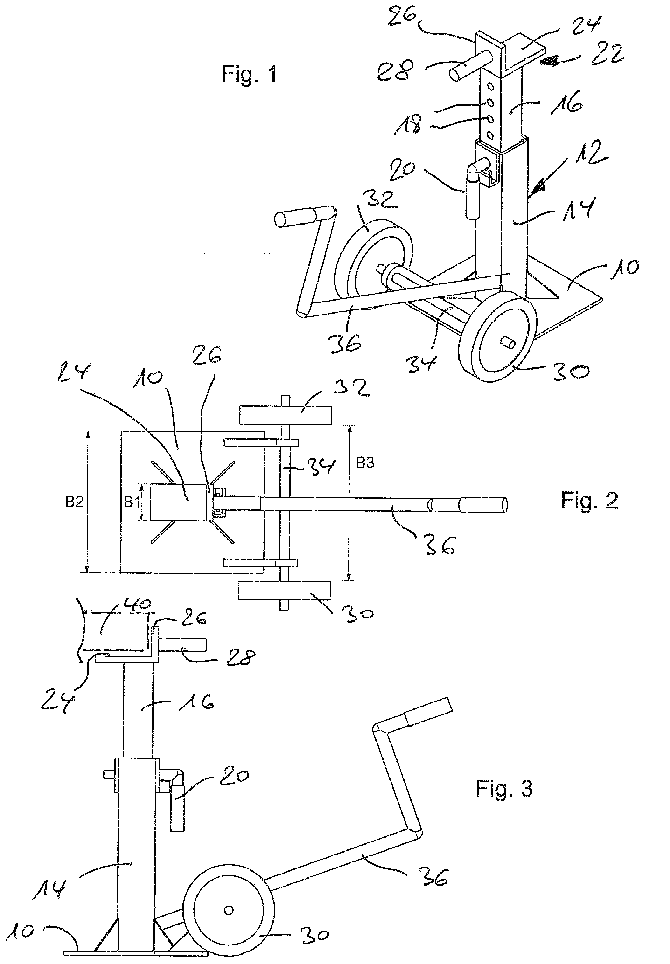

Die Figuren 1 bis 4 verdeutlichen zunächst die wesentlichen konstruktivmechanischen Komponenten der Standsicherungsvorrichtung des gezeigten ersten Ausführungsbeispiels: Auf einer eine i.W. plane Unterfläche für einen unterliegenden Boden ausbildenden Bodenplatte 10 aus (verzinktem) Stahlmaterial ist ein teleskopartig verlängerbarer Ständer 12 durch Schweißen unlösbar befestigt und mittels Verstrebungen mechanisch abgestützt, welcher ein in einem querschnittlich rechteckförmigen Außenrohr 14 geführtes Innenrohr 16 ausbildet, das wiederum in regelmäßigen Abständen vorgesehene Verriegelungsbohrungen 18 aufweist, welche mit manuell betätigbaren Verriegelungsmitteln 20 des Außenrohres so zusammenwirken können, dass entsprechend eines Relativabstandes der Bohrungen 18 vorbestimmte Höhenpositionen festlegbar sind. Endseitig des Innenrohres 16 ist ein Winkelstück 22 durch Verschweißen unlösbar verbunden, welches einerseits eine (sich i.W. parallel zur Bodenplatte 10 erstreckende) Stützauflage 24 ausbildet, anderseits in Form eines sich davon vertikal erstreckenden Abschnitts 26 die erfindungsgemäßen Anschlagmittel realisert. Rückwärtig ist dem Abschnitt 26 ein einen Handgriff realisierender Angriffsabschnitt 28 für eine manuelle Handhabung der Vorrichtung zugeordnet.

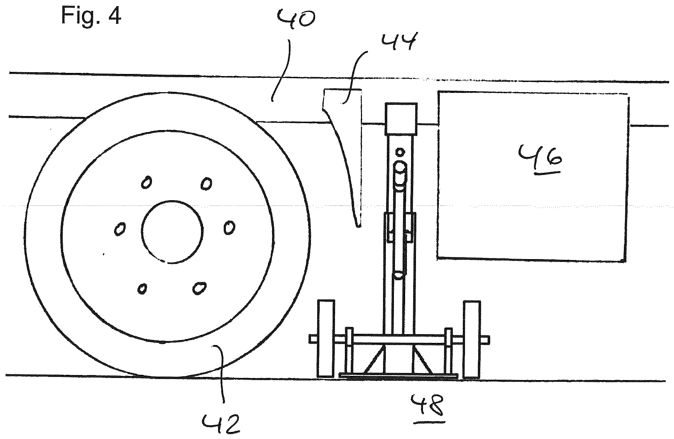

Die Figuren 1 bis 4 lassen zudem erkennen, dass der im aufgesetzten Zustand einen Standfuß realisierenden Bodenplatte 10 ein Radsatz bestehend aus einem Radpaar 30, 32 mit verbindender Achsanordnung 34 so zugeordnet ist, dass in einem planen Auflagezustand der Platte 10 auf einem unterliegenden Boden die Räder 30, 32 gerade nicht den Boden kraftwirksam berühren, der Radsatz 30, 32 jedoch so an der Bodenplatte 10 festgelegt ist, dass durch ein Verschwenken oder Verkippen um eine der Achse 34 entsprechende Kippachse die gesamte Vorrichtung mittels des Radsatzes 30, 32 bewegt werden kann, da in einem solchen verkippten Zustand die Räder den unterliegenden Boden berühren, während die Bodenplatte 10 sich vom Boden abhebt. Dieses Verkippen und ein nachfolgendes manuelles Verfahren der so verkippten Vorrichtung wird erleichtert durch einen kurbelartig ausgestalteten Kipphebel 36, welcher in der in den Figuren 1, 3 gezeigten Weise bodenartig an den Ständer angreift, so dass günstige Kipp- bzw. Schwenkverbindungen bei gleichzeitig einfacher Verfahrbarkeit gegeben sind. Gemäß einer bevorzugten Weiterbildung der Erfindung ist zudem die Befestigung des Hebels 36 am Ständer 12 nicht fest, sondern (z.B. durch Einschieben und Herausführen) lösbar, so dass dann der Hebel 36, insbesondere in seiner gezeigten Kurbelform benutzt werden kann, um einen (in den Figuren nicht näher im Detail gezeigten) Spindel- bzw. Windenantrieb zum Bewirken der Höhenverstellung beim Auseinanderführen der Rohre 14, 16 durch eine Bedienperson zu ermöglichen. Die Figur 2 verdeutlicht in einer Draufsicht zusätzlich die geometrischen Breitenverhältnisse, erfindungsgemäß weiterbildend als jeweilige Quererstreckungen zu verstehen: So markiert die Quererstreckung B1 eine maximale Breite der Baugruppe 22, während B2 eine maximale Breite und Quererstreckung der Bodenplatte 10 beschreibt. Hier liegt das Verhältnis B1:B2 < 25 %, so dass die vorliegende Erfindung, die nachfolgend anhand der Fig. 4 zum Einsatzkontext zu erläutern sein wird, besonders günstig mit ihrem oberen Ende für die Stützauflage und den Anschlag zum Einführen zu einem Trägerabschnitt eines Sattelauflegers selbst unter beengten Platzbedingungen geeinget ist, während bodenseitig durch die deutlich breitere Platte 10 stets eine bestmögliche Abstützung und ein zuverlässiger Krafteintrag in den unterliegenden Boden gewährleistet ist. Vergleichbar günstige Proportionen stehen zwischen der Quererstreckung B1 der Auflagefläche samt Anschlag einerseits und einem Abstand der Räder 30, 32 andererseits, in der Fig. 2 mit B3 bezeichnet, der das Innenmaß des Radabstandes kennzeichnet. Auch hier beträgt das Verhältnis B1:B3 weniger als 25 %, wiederum zum Ermöglichen der günstigen Betriebseigenschaften, welche einerseits möglichst schmalen Auflagekontakt am Sattelaufleger kombiniert mit einer möglichst breiten bodenseitigen Führung und Abstützung (bzw. günstigen Verschiebeeigenschaften der Vorrichtung durch das weit außen ansetzende Radpaar 30, 32).

Während mit dem Bezugszeichen 40 und gestrichelt angedeutet in Fig. 4 eine Anschlags-Unterstützungsposition für einen (querschnittlich gezeigten) Trägerabschnitt eines Sattelauflegers gezeigt ist, verdeutlicht die Fig. 4 in der Seitenansicht diesen Einsatzkontext im Gesamtbild. Es wird deutlich, dass die Standsicherungsvorrichtung der Figuren 1 bis 3, nicht zuletzt durch die günstigen Quererstreckungsgeometrien, eingeschoben werden kann zwischen ein Rad 42 des Auflegers (mit dem zugeordneten Schmutzabweiser 44) und ein weiteres, seitlich eng benachbart vorgesehenes LKW-Aggregat 46, z.B. einen Tank. Die günstigen Geometrien ermöglichen das Hindurchführen des Ständerabschnitts bis hin zu einem (innenliegend versetzten) Trägerabschnitt 40, wo dann entsprechend des Prinzips der Fig. 3 sowohl bodenseitig von unten mittels der Auflage 24, als auch seitlich anschlagend mittels der Anschlagmittel 26 ein zuverlässiger Kontakt hergestellt werden kann, welcher in einem Abstützbetrieb das zuverlässige und betriebssichere Abstützen ermöglicht. Die Figur 4 verdeutlicht zudem, dass die (gegenüber den Auflagen 24, 26) breite Bodenplatte 10 den zuverlässigen Krafteintrag in einen unterliegenden Boden 48 bewirkt.

Die vorliegende Erfindung ist nicht auf das gezeigte Ausführungsbeispiel, welches lediglich exemplarisch aus verzinktem Stahlmaterial realisiert ist, beschränkt. Vielmehr ist die anhand der Fig. 1 bis 4 gezeigte Ausgestaltung rein beispielhaft und lässt sich sowohl im Hinblick auf das Einsatzobjekt - statt des exemplarisch beschriebenen Sattelauflegers kann die Erfindung etwa auch für einen selbständig fahrenden LKW genutzt werden - als auch im Hinblick auf Materialien, als auch weitere Ausgestaltungen nahezu beliebig variieren, so dass insbesondere jeweiligen Einsatzumgebungen und vorhandenen Fahrzeuggeometrien Rechnung getragen werden kann.

## Patentansprüche

1. Standsicherungsvorrichtung für einen LKW und/oder für einen von einer Zugmaschine abkoppelbaren Sattelaufleger mit
einem eine bodenseitige Auflagefläche ausbildenden Standfuß (10) sowie einem sich vertikal von diesem erstreckenden, bevorzugt längenverstellbar ausgebildeten Ständer (12), der endseitig zum stützenden Zusammenwirken mit einem Trägerabschnitt des LKW bzw. Sattelauflegers ausgebildet ist,
wobei der Ständer an einem dem Standfuß entgegengesetzten Endbereich des Ständers eine sich parallel zur Auflagefläche erstreckende Stützauflage (24) für den Trägerabschnitt ausbildet, die sich zumindest abschnittsweise vertikal erstreckende Anschlagmittel (26) zum zusätzlichen seitlichen Anlegen an den Trägerabschnitt oder eines diesem benachbarten Anbaus oder Aggregats des LKW bzw. Sattelauflegers zugeordnet aufweist,
**dadurch gekennzeichnet, dass**
dem Standfuß Transportmittel (30 - 34) für die Standsicherungsvorrichtung so zugeordnet sind, dass diese in einem Sicherungszustand mit auf einem Boden aufliegender Auflagefläche den Boden nicht berühren und in einem gegenüber dem Sicherungszustand verkippten Transportzustand der Standsicherungsvorrichtung ein bevorzugt rollendes Bewegen der Standsicherungsvorrichtung durch manuelle Betätigung ermöglichen.

2. Vorrichtung nach Anspruch 1, **dadurch gekennzeichnet, dass** die Stützauflage mit den Anschlagmitteln als gemeinsames, weiter bevorzugt einstückig realisiertes Winkelstück (22) ausgebildet ist.

3. Vorrichtung nach Anspruch 2, **dadurch gekennzeichnet, dass** am Winkelstück oder diesem benachbart am Ständer ein zur manuellen Führung und/oder Höhenverstellung der Standsicherungsvorrichtung ausgebildeter Angriffsabschnitt (28), insbesondere Handgriff, vorgesehen ist.

4. Vorrichtung nach einem der Ansprüche 1 bis 3, **dadurch gekennzeichnet, dass** der Ständer mehrteilig zum Realisieren einer teleskopartig und bevorzugt in mehreren Rast- und/oder Verriegelungsabschnitten gestuft einstellbaren Längenverstellung ausgebildet ist.

5. Vorrichtung nach einem der Ansprüche 1 bis 4, **dadurch gekennzeichnet, dass** für das rollende Bewegen manuell handhabbare hebel- und/oder stangenartige, bevorzugt am Ständer und insbesondere dort bodenseitig angreifende Führungsmittel (36) vorgesehen sind.

6. Vorrichtung nach Anspruch 5, **dadurch gekennzeichnet, dass** die Führungsmittel von der Standsicherungsvorrichtung abnehmbar und so ausgebildet sind, dass die Führungsmittel zusätzlich zur Betätigung einer Längenverstellung des Ständers betätigt werden können, insbesondere eine Betätigungskurbel für einen die Längenverstellung ermöglichenden Winden- und/oder Spindelantrieb realisieren können.

7. Vorrichtung nach einem der Ansprüche 1 bis 6, **dadurch gekennzeichnet, dass** eine Quererstreckung (31) der Stützauflage und der Anschlagmittel so bemessen ist, dass diese weniger als 40 %, bevorzugt weniger als 30 %, weiter bevorzugt weniger als 25 %, einer maximalen Quererstreckung (32) und/oder maximalen parallel verlaufenden Fußweite des Standfußes und/oder eines Radabstandes (33) einer dem Standfuß für einen Transport der Standsicherungsvorrichtung zugeordneten Radanordnung beträgt.

8. System aufweisend einen LKW oder einen bevorzugt von einer Zugmaschine abgekoppelt vorgesehenen und weiter bevorzugt an einer Be- und/oder Entladeanlage stehenden Sattelaufleger und mindestens eine Standsicherungsvorrichtung nach einem der Ansprüche 1 bis 7, die einem Rad des LKW bzw. Sattelauflegers benachbart seitlich und von unten gegen einen Trägerabschnitt (40) LKW bzw. des Sattelauflegers greift oder greifen kann.

9. Verfahren zur Standsicherung eines LKW oder eines bevorzugt an einer Be- und/oder Entladeanlage stehenden Sattelauflegers, **gekennzeichnet durch**
- manuelles Führen der Standsicherungsvorrichtung nach einem der Ansprüche 1 bis 7 neben einem Rad des LKW bzw. Sattelauflegers unter diesen, bis die Anschlagmittel einen Trägerabschnitt des Sattelauflegers erreichen,
- Verstellen einer Länge des Ständers der Standsicherungsvorrichtung, bevorzugt nach dem manuellen Führen und bis die Stützauflage den Trägerabschnitt von unten erreicht, und
- Abkoppeln einer Zugmaschine vom Sattelaufleger und/oder Absenken des Sattelauflegers auf die Stützauflage, insbesondere durch Belasten des Sattelauflegers bzw. LKW bei einem Be- und/oder Entladen.

## Claims

1. A stability device for a truck and/or for a semi-trailer that can be uncoupled from a tractor, comprising
a base (10) which forms a bottom-side support surface and, vertically extending therefrom, a pillar (12) which is preferably length-adjustable and the end of which is configured to interact in a supporting manner with a beam portion of the truck or semi-trailer,
the pillar forming a support rest (24) for the beam portion at an end portion of the pillar opposite the base, said support rest extending parallel to the support surface and having stop means (26) extending at least partially in the vertical direction for additional lateral contact with the beam portion or of an attachment or part adjacent thereto of the truck or semi-trailer,
**characterized in that**
transport means (30 to 34) for the stability device are assigned to the base in such a manner that they do not touch the ground when in a stabilizing state in which the support surface is in contact with the ground and that they allow the stability device to be moved, preferably rolled, by manual operation when the stability device is in a transport state in which it is tilted compared to the stabilizing state.

2. The device according to claim 1, **characterized in that** the support rest together with the stop means forms a joint angle, further preferably an angle (22) realized in one piece.

3. The device according to claim 2, **characterized in that** at the angle or adjacent thereto at the pillar, a grip portion (28), in particular a handle, is provided for manually guiding the stability device and/or adjusting the height of the stability device.

4. The device according to any one of claims 1 to 3, **characterized in that** the pillar is composed of multiple parts so as to realize a length adjustment that can be adjusted telescopically and preferably stepwise in multiple latching and/or locking stages.

5. The device according to any one of claims 1 to 4, **characterized in that** lever-type and/or bar-type guide means (36) manually operable to move the device by rolling are provided, said guide means preferably connecting to the pillar and there to the bottom in particular.

6. The device according to claim 5, **characterized in that** the guide means can be removed from the stability device and are designed in such a manner that the guide means can be additionally operated to actuate a length adjustment of the pillar, the guide means being adapted in particular to form an operating crank for a winch and/or spindle drive allowing the length adjustment.

7. The device according to any one of claims 1 to 6, **characterized in that** a transverse width (31) of the support rest and of the stop means is dimensioned such that it is less than 40 %, preferably less than 30 %, further preferably less than 25 % of a maximum transverse width (32) and/or of a maximum parallel width of the base and/or of a distance (33) between wheels of a wheel assembly assigned to the base for transport of the stability device.

8. A system comprising a truck or a semi-trailer preferably present in a state uncoupled from a tractor and further preferably standing at a loading and/or unloading installation, and at least one stability device according to any one of claims 1 to 7 which, next to a wheel of the truck or semi-trailer, engages or can engage against a beam portion (40) of the truck or of the semi-trailer from the side and from below.

9. A method for stabilizing a truck or a semi-trailer preferably standing at a loading and/or unloading installation, **characterized by** the steps of
- manually guiding the stability device according to any one of claims 1 to 7 under the truck or semi-trailer next to a wheel thereof until the stop means reach a beam portion of the semi-trailer,
- adjusting a length of the pillar of the stability device, preferably after the manual guiding and until the support rest reaches the beam portion from below, and
- uncoupling a tractor from the semi-trailer and/or lowering the semi-trailer onto the support rest, in particular by putting weight on the semi-trailer or truck during loading and/or unloading.

## Revendications

1. Dispositif de stabilisation pour un poids lourd et/ou pour une semi-remorque qui peut être découplé d'un tracteur, comprenant
un pied (10) qui forme une surface de support du côté sol et un support (12) qui s'étend verticalement à partir du pied et dont la longueur est préférablement ajustable et dont l'extrémité est configurée pour interagir de façon supportant avec une partie de poutre du poids lourd ou de la semi-remorque,
le support formant, à une partie d'extrémité du support opposée du pied, un appui (24) pour la partie de poutre, ledit appui s'étendant parallèlement à la surface de support et ayant des moyens de butée (26) s'étendant au moins en partie dans la direction verticale pour un contact additionnel latéral avec la partie de poutre ou d'un accessoire ou d'une pièce adjacent(e) à la partie de poutre du poids lourd ou de la semi-remorque,
**caractérisé en ce que**
des moyens de transport (30 à 34) pour le dispositif de stabilisation sont assignés au pied de telle façon qu'ils ne touchent pas le sol dans un état de stabilisation où la surface de support est en contact avec les sol et qu'ils permettent un déplacement préférablement roulant du dispositif de stabilisation par actionnement manuel dans un état de transport du dispositif de stabilisation où il est basculé par rapport à l'état de stabilisation.

2. Dispositif selon la revendication 1, **caractérisé en ce que** l'appui conjointement avec les moyens de butée forme une cornière (22) commune, plus préférablement une cornière monobloc.

3. Dispositif selon la revendication 2, **caractérisé en ce que** sur la cornière ou adjacent à celle-ci sur le support, une partie de préhension (28), notamment une poignée, est prévue pour le guidage manuel du dispositif de stabilisation et/ou pour l'ajustement manuel de la hauteur du dispositif de stabilisation.

4. Dispositif selon l'une quelconque des revendications 1 à 3, **caractérisé en ce que** le support est composé de plusieurs parties afin de réaliser un ajustement de longueur télescopique et préférablement ajustable de manière échelonnée en plusieurs étapes d'encliquetage et/ou verrouillage.

5. Dispositif selon l'une quelconque des revendications 1 à 4, **caractérisé en ce que** des moyens de guidage (36) de type levier et/ou barre manuellement opérables pour le déplacement roulant sont prévus, lesdits moyens de guidage engageant préférablement sur le support et y notamment du côté fond.

6. Dispositif selon la revendication 5, **caractérisé en ce que** les moyens de guidage sont amovibles du dispositif de stabilisation et sont réalisés de telle façon que les moyens de guidage peuvent être actionnés en outre afin d'actionner l'ajustement de la longueur du support, les moyens de guidage étant apte notamment à former une manivelle pour un entraînement de treuil et/ou un entraînement de broche permettant l'ajustement de longueur.

7. Dispositif selon l'une quelconque des revendications 1 à 6, **caractérisé en ce qu'**une largeur transversale (31) de l'appui et des moyens de butée est dimensionnée de façon à être inférieure à 40 %, préférablement inférieure à 30 %, plus préférablement inférieure à 25 % d'une largeur transversale maximale (32) et/ou d'une largeur parallèle maximale du pied et/ou d'une distance (33) entre des roues d'un ensemble de roues assigné au pied pour le transport du dispositif de stabilisation.

8. Système comprenant un poids lourd ou une semi-remorque préférablement présente dans un état découplé d'un tracteur et plus préférablement se trouvant à une installation de chargement et/ou déchargement, et au moins un dispositif de stabilisation selon l'une quelconque des revendications 1 à 7 qui, adjacent à une roue du poids lourd ou de la semi-remorque, engage ou peut engager une partie de poutre (40) du poids lourd ou de la semi-remorque par le côté et par le bas.

9. Procédé de stabilisation d'un poids lourd ou d'une semi-remorque se trouvant préférablement à une installation de chargement et/ou déchargement, **caractérisé par** les étapes consistant à
- guider manuellement le dispositif de stabilisation selon l'une quelconque des revendications 1 à 7 sous le poids lourd ou la semi-remorque à côté d'une roue de celui-ci/celle-ci jusqu'à ce que les moyens de butée atteignent une partie de poutre de la semi-remorque,
- ajuster une longueur du support du dispositif de stabilisation, préférablement après le guidage manuel et jusqu'à ce que l'appui atteint la partie de poutre par le bas, et
- découpler un tracteur de la semi-remorque et/ou abaisser la semi-remorque sur l'appui, notamment en alourdissant la semi-remorque ou le poids lourd lors du chargement et/ou déchargement.
